# EUROPÄISCHE PATENTSCHRIFT

(11) **EP 1 673 921 B1**
(45) Veröffentlichungstag und Bekanntmachung des Hinweises auf die Patenterteilung: **28.11.2018**
(21) Anmeldenummer: 04791217.5
(22) Anmeldetag: 13.10.2004
(51) Int. Cl.: H04L 29/06, H04W 12/04, H04W 12/06

(54) **VERFAHREN ZUR SICHERUNG DES DATENVERKEHRS ZWISCHEN EINEM MOBILFUNKNETZ UND EINEM IMS-NETZ**
METHOD FOR SECURING THE DATA TRAFFIC BETWEEN A MOBILE RADIO NETWORK AND AN IMS NETWORK
PROCÉDÉ DE SÉCURISATION DU TRAFIC DE DONNÉES ENTRE UN RÉSEAU DE TÉLÉPHONIE MOBILE ET UN RÉSEAU IMS

(30) Priorität: 14.10.2003 DE 10347772; 01.12.2003 DE 10356091
(43) Veröffentlichungstag der Anmeldung: 28.06.2006
(73) Patentinhaber: Siemens Aktiengesellschaft, 80333 München (DE)
(72) Erfinder: KRÖSELBERG, Dirk, 80469 München (DE)
(86) Internationale Anmeldenummer: PCT/EP2004/052527
(87) Internationale Veröffentlichungsnummer: WO 2005/039141

(56) Entgegenhaltungen:
- US-A1- 2003 159 067
- "3rd Generation Partnership Project; Technical Specification Group Services and System Aspects; 3G Security; Access security for IP-based services (Release 5)", 3GPP STANDARD; 3GPP TS 33.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.7.0, 1 September 2003 (2003-09-01), pages 1-41, XP050376604,

## Beschreibung

Die Erfindung betrifft ein Verfahren zur Sicherung des Datenverkehrs zwischen ein Mobilfunknetz und einem IMS-Netz sowie ein entsprechendes Datennetz.

Das in der 3GPP-Organisation (3GPP = 3^{rd} Generation Partnership Project) standardisierte IMS-Subnetz (IMS = IP-based Multimedia Subsystem) stellt einem mobilen Teilnehmer in einem Mobilfunknetz Multimedia-Dienste zur Verfügung. Um eine authentifizierte Anmeldung eines mobilen Teilnehmers in einem IMS-Netz zu erreichen, ist aus dem Stand der Technik das IMS-AKA-Protokoll (AKA = Authentification and Key Agreement) bekannt (siehe Dokument [1]). Im IMS Release 5 wird eine Sicherheitsarchitektur verwendet, in der Schlüsselmaterial in einem sogenannten ISIM (IP Multimedia Services Identity Module) auf der Chipkarte des mobilen Endgeräts des Teilnehmers enthalten ist, wobei dieses Schlüsselmaterial ferner in Rechnern im IMS-Netz abgespeichert ist. Es ist hierbei nachteilhaft, dass das Schlüsselmaterial für die Datenverkehrssicherung der Multimedia-Dienste vorab im IMS-Netz und auf dem ISIM abzuspeichern ist.

Aufgabe der Erfindung ist es deshalb, ein Verfahren zur Datenverkehrssicherung zwischen einem Mobilfunknetz und einem IMS-Netz zu schaffen, welches auf einfache Weise eine Bereitstellung von identischem Schlüsselmaterial für das IMS-Netz und den mobilen Teilnehmer ermöglicht.

Diese Aufgabe wird durch die unabhängigen Patentansprüche gelöst. Weiterbildungen der Erfindung sind in den abhängigen Ansprüchen definiert.

In dem erfindungsgemäßen Verfahren zur Sicherung des Datenverkehrs authentifiziert sich zunächst ein mobiler Teilnehmer im Mobilfunknetz. Anschließend wird der mobile Teilnehmer im IMS-Netz authentifiziert. Schließlich wird überprüft, ob die Identität des im IMS-Netz authentifizierten mobilen Teilnehmers mit der Identität des im Mobilfunknetz identifizierten Teilnehmers übereinstimmt. Im Falle übereinstimmender Identitäten wird eine Bestätigungsnachricht zwischen dem mobilen Teilnehmer und dem IMS-Netz ausgetauscht. Die Überprüfung der Identität des mobilen Teilnehmers sowie der Austausch einer Bestätigungsnachricht sind aus dem Stand der Technik bekannt, es sei hier beispielhaft auf das Dokument [2] verwiesen. Vorzugsweise ist die Bestätigungsnachricht ein Zufallswert. Beim Datenaustausch zwischen dem mobilen Teilnehmer und dem IMS-Netz wird anschließend ein durch einen gemeinsamen Schlüssel geschütztes Sicherheitsprotokoll verwendet, wobei der Schlüssel für das Sicherheitsprotokoll aus der Bestätigungsnachricht abgeleitet wird. Der Erfindung liegt die Idee zugrunde, eine bei der Überprüfung der Identität verwendete Bestätigungsnachricht in einem Sicherheits-protokoll als Schlüssel einzusetzen, so dass es nicht mehr notwendig ist, separat identische Schlüssel für den mobilen Teilnehmer und das IMS-Netz bereitzustellen.

In einer besonders bevorzugten Ausführungsform der Erfindung ist der Schlüssel für das Sicherheitsprotokoll die Bestätigungsnachricht selbst, d. h. die Ableitung des Schlüssels aus der Bestätigungsnachricht besteht in der Verwendung der Bestätigungsnachricht als Schlüssel. Hierdurch wird eine besonders einfache Implementation des erfindungsgemäßen Verfahrens erreicht.

In einer weiteren Ausführungsform der Erfindung ist der Schlüssel ein gemeinsames Geheimnis zwischen dem IMS-Netz und dem mobilen Teilnehmer. Die Authentifizierung erfolgt somit ohne weitere Eingaben des mobilen Teilnehmers. Alternativ kann der Schlüssel ein von dem mobilen Teilnehmer eingebbares Passwort sein.

In einer weiteren Ausgestaltung des erfindungsgemäßen Verfahrens erfolgt die Authentifizierung des mobilen Teilnehmers im IMS-Netz über das hinlänglich aus dem Stand der Technik bekannte SIP-Protokoll (SIP = Session Initiation Protocol) bzw. über das ebenfalls bekannte HTTP-Protokoll. Ferner wird als besonders bevorzugtes Sicherheitsprotokoll HTTP-Digest verwendet, wobei dieses Protokoll ebenfalls hinlänglich aus dem Stand der Technik bekannt ist.

Neben dem oben beschriebenen Verfahren zur Datenverkehrssicherung betrifft die Erfindung ferner ein Datennetz, welches ein Mobilfunknetz und ein IMS-Netz umfasst, wobei das Datennetz derart ausgestaltet ist, dass der Datenverkehr zwischen dem Mobilfunknetz und dem IMS-Netz gemäß dem erfindungsgemäßen Verfahren gesichert ist. Das Mobilfunknetz, welches einen Teil des Datennetzes bildet, ist dabei vorzugsweise ein GPRS- und/oder UMTS-Netz.

Ausführungsbeispiele der Erfindung werden nachfolgend anhand der beigefügten Zeichnungen beschrieben.

Es zeigen:
- Figur 1: den schematischen Aufbau eines Datennetzes, in dem das erfindungsgemäße Datensicherungsverfahren eingesetzt werden kann;
- Figur 2: einen Nachrichtenfluss gemäß dem aus dem Stand der Technik bekannten IMS-AKA-Protokoll;
- Figur 3: eine schematische Skizze, welche das erfindungsgemäße Verfahren erläutert; und
- Figur 4: einen Nachrichtenfluss gemäß dem erfindungsgemäßen Verfahren.

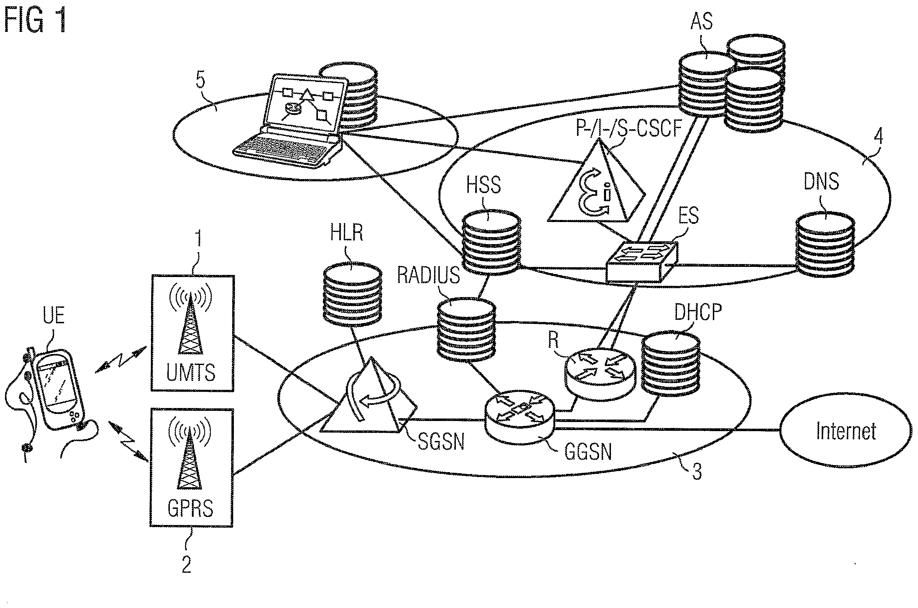

Figur 1 zeigt ein Datennetz, bei dem Daten zwischen einem Benutzerendgerät UE (UE = User Equipment) und einer Mehrzahl von Subnetzen eines Datennetzes ausgetauscht werden. Das Datennetz umfasst Luftschnittstellen 1 und 2, wobei es sich bei der Schnittstelle 1 um eine UMTS-Schnittstelle und bei der Schnittstelle 2 um eine GPRS-Schnittstelle handelt (UMTS = Universal Mobile Telecommunication System; GPRS = General Package Radio Service). Über die Luftschnittstellen erfolgt eine verschlüsselte Übertragung.

An die Luftschnittstellen schließt sich ein Subnetz 3 an, welches je nach verwendeter Luftschnittstelle ein GPRS- bzw. ein UMTS-Netz sein kann. Ein solches Netz umfasst als Eingangsrechner einen SGSN-Server SGSN (SGSN = Serving GPRS Support Node), an den sich ein GGSN-Server GGSN (GGSN = Gateway GPRS Support Node) sowie ein HLR-Server HLR (HLR = Home Location Register) anschließt. Der GGSN-Server ist wiederum mit einem Radius-Server RADIUS, einem DHCP-Server DHCP (DHCP = Dynamic Host Configuration Protocol), einem Router R sowie mit dem Internet verbunden. Die einzelnen Komponenten des Subnetzes 3 sind allseits bekannte Komponenten aus einem GPRS- bzw. UMTS-Netz, so dass auf die einzelnen Funktionen der Komponenten an dieser Stelle nicht näher eingegangen wird. Es sei lediglich angemerkt, dass in dem HLR-Server die Benutzerdaten des Benutzers gespeichert sind und bei der Registrierung des Gerätes UE mit der SIM-Karte des Benutzers im Netz abgerufen werden können, wodurch eine Authentifizierung des Benutzers im Netz 3 erfolgt.

An das Subnetz 3 schließt sich ein IMS-Netz 4 an, welches über den Server HSS (HSS = Home Subscriber Server) bzw. den Ethernet-Switch ES mit dem Subnetz 3 verbunden ist. Das IMS-Netz umfasst als weitere Komponenten ferner den Domain-Name-Server DNS, die Server P-/I-/S-CSCF (CSCF = Call Session Control Function) sowie die Applikationsserver AS. Die einzelnen Komponenten des IMS-Netzes sind ebenfalls aus dem Stand der Technik bekannt, so dass sie hier nicht näher erläutert werden. Das IMS-Netz stellt Mehrwertdienste für den Benutzer des Endgeräts UE zur Verfügung. Bei diesen Diensten handelt es sich insbesondere um Multimedia-Dienste, die über die Applikationsserver AS dem Benutzer bereitgestellt werden. An das Subnetz 4 schließt sich ferner ein weiteres (nicht näher spezifiziertes) Subnetz 5 an. Der HSS-Server HSS im Netz 4 stellt das Analogon zum Server HLR im Netz 3 dar, wobei im HSS-Server Benutzerprofile für die Registrierung und Authentifizierung im IMS-Netz 4 gespeichert sind.

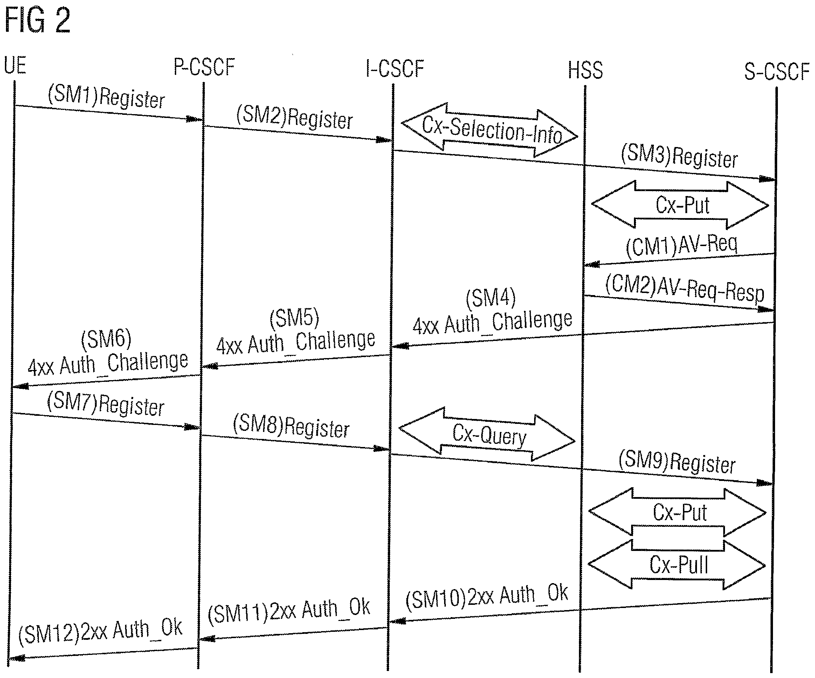

Zur Datenverkehrssicherung sind in den IMS-Versionen 5 bzw. 6 3GPP-Spezifikationen festgelegt. Eine dieser Spezifikationen ist das IMS-AKA-Protokoll. Der Nachrichtenfluss dieses Protokolls ist in Figur 2 dargestellt, wobei auf die genauen Bezeichnungen der Nachrichten nicht näher eingegangen wird, da diese dem Fachmann geläufig sind. In diesem Protokoll erfolgt zunächst das Aussenden einer Register-Nachricht von dem Benutzerendgerät UE über die Rechner P-CSCF, I-CSCF, HSS zum Rechner S-CSCF. Mit dieser Nachricht teilt das Endgerät UE dem IMS-Netz mit, dass es sich in diesem Netz registrieren möchte. Die Nachricht wird im SIP-Protokoll übertragen und enthält die SIP-Identität des Benutzerendgeräts UE. Der Rechner S-CSCF sendet anschließend einen sogenannten AV-Request (AV = Authentifikation Vector) an den Rechner HSS, wobei dieser AV-Request wiederum die SIP-Identität des Benutzerendgeräts UE enthält. Der Rechner HSS überprüft anschließend, ob er Benutzerdaten zu der SIP-Identität des AV-Requests gespeichert hat und schickt eine entsprechenden AV-Request-Response an den S-CSCF-Rechner zurück. Anschließend läuft die AKA-Authentifizierung über das Aussenden von Authentifizierungsnachrichten zwischen dem Endgerät UE und dem Server S-CSCF. Bei dieser Authentifizierung wird zunächst ein sogenannter Auth-Challenge an das UE geschickt, woraufhin mit einer Register-Nachricht geantwortet wird. Ist die Authentifizierung erfolgreich, wird ein Auth-OK an das UE zurückgesendet und der Datenaustausch kann anschließend erfolgen. Im IMS-AKA-Protokoll werden der Benutzer des Endgeräts UE und das Netz gegenseitig authentifiziert und es werden zwei Schlüssel generiert, die im Anschluss an die Authentifizierung zum Schutz nachfolgender Signalisierungsnachrichten im IMS-Netz verwendet werden.

Neben dem Schutz der reinen IMS-SIP-Signalisierungsnachrichten gemäß dem IMS-AKA-Pro-tokoll können darüber hinaus zwischen dem mobilen Benutzer des Endgeräts UE und einem Applikationsserver im Netz weitere Nachrichten ausgetauscht werden. Beispielsweise kann der Benutzer über das HTTP-Protokoll mit einem Applikationsserver AS in der Form eines HTTP-Servers kommunizieren. Der Applikationsserver AS wird hierbei zu Administrationszwecken oder für andere Anwendungen verwendet. Beispiele solcher anderen Anwendungen sind neben dem Austausch des HTTP-Protokolls ein Walkie-Talkie-Gespräch über Push-to-Talk Over Cellular (POC), die Zugriffslisten auf Datenservern und ähnliches. Weitere Anwendungen sind Buddy-Listen von Chat-Applikationen sowie Gruppenmanagement-Dienste oder Konferenzschaltungen.

Zum Austausch von gesicherten Nachrichten zwischen einem Applikationsserver AS und einem Benutzerendgerät UE können bekannte Sicherheitsprotokolle, wie HTTP-Digest oder ähnliches verwendet werden. Bei diesen Protokollen ist es erforderlich, dass sowohl das Benutzerendgerät als auch der Applikationsserver über gemeinsames Schlüsselmaterial bzw. Passwörter verfügen, welche vor dem Aussenden der ersten gesicherten Nachricht beiden zur Verfügung stehen müssen. Eine Lösung, um zwischen einem Applikationsserver AS und einem Benutzerendgerät UE gesichert Daten auszutauschen, besteht darin, dass die Schlüssel für die gesicherte Datenübertragung aus der bereits bestehenden Schlüsselinfrastruktur- der Netzbetreiber abgeleitet wird (siehe Dokument [3]). Da die in Dokument [3] beschriebene Lösung erst mit dem 3GPP Release 6 verfügbar ist und in nächster Zeit nicht unterstützt wird, wird bei der nachfolgend beschriebenen Ausführungsform des erfindungsgemäßen Datenverkehrs-Sicherungsverfahrens eine alternative Lösung unter Verwendung bereits existierender Schlüsselinfrastruktur beschrieben.

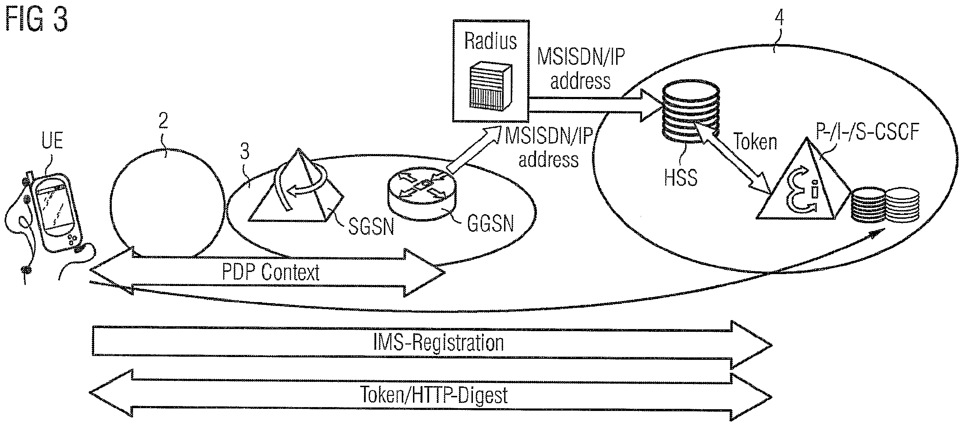

Der in Figur 3 schematisch dargestellte Datenaustausch gemäß dem erfindungsgemäßen Verfahren entstand im Rahmen der Standardisierung des Dienstes POC (Push-to-Talk Over Cellular), der von der OMA (Open Mobile Alliance) entwickelt wird. Bei dieser Standardisierung werden IMS-basierte Applikationen spezifiziert, die als Sicherheitsprotokoll HTTP-Digest verwenden. HTTP-Digest kann sowohl HTTP-basierte als auch SIPbasierte Kommunikation schützen. Die relevanten Spezifikationen zu PoC finden sich in den Dokumenten [4], [5] und [6]. Das in Figur 3 dargestellte Verfahren setzt ferner auf bereits aus dem Stand der Technik bekannte Datenverkehrs-Sicherungsverfahren auf, die insbesondere in den Dokumenten [2] und [7] beschrieben sind und von dem Anmelder entwickelt wurden.

In Figur 3 sind die für die Datenverkehrssicherung relevanten Komponenten des in Figur 1 dargestellten Datennetzes wiedergegeben. Gemäß Figur 3 meldet sich ein Benutzer des mobilen Endgeräts UE zunächst an dem GPRS-Netz 3 über die Luftschnittstelle 2 an. Im Rahmen dieser Anmeldung authentifiziert sich der Benutzer mittels seiner SIM-Karte und es wird ein gesicherter PDP-Kontext mit dem GPRS-Netz aufgebaut. Ferner wird dem mobilen Teilnehmer eine IP-Adresse zugewiesen. Der PDP-Kontext stellt einen Datentunnel dar, in dem Datenpakete über die Luftschnittstelle an das GPRS-Netz 3 übermittelt werden.

Im GPRS-Netz ist neben der zugewiesenen IP-Adresse auch noch die Identität MSISDN des Endgeräts UE im GPRS-Netz bekannt. Die IP-Adresse und diese Identität MSISDN werden über einen Radius-Server an den HSS-Server übermittelt. Aus der GPRS-Identität MSISDN kann der Server HSS die entsprechend zugeordnete IMS-Identität des Geräts UE ermitteln und der aktuell zugewiesene IP-Adresse zuordnen. Die zugewiesene IP-Adresse und die IMS-Identität werden anschließend vom HSS an den S-CSCF-Server übermittelt.

Das Benutzerendgerät UE registriert sich ferner an dem P-CSCF-Server des IMS-Netzes, wobei diese Registrierung durch den mit "IMS-Registration" bezeichneten Pfeil in Figur 3 angedeutet ist. Bei dieser Registrierung wird die tatsächlich verwendete IP-Adresse des IMS-Nutzers dem P-CSCF-Server bekannt. Der P-SCSF-Sever sendet diese IP-Adresse an den S-CSCF-Server, der überprüft, ob diese IP-Adresse und die vom HSS übermittelte IP-Adresse identisch sind und der bei der IMS-Registrierung angegebenen IMS-Identität entsprechen. Durch diese Überprüfung kann sichergestellt werden, dass ein IMS-Benutzer nicht die Identität eines anderen IMS-Benutzers annimmt. Er gibt die Überprüfung, dass die IP-Adressen der gleichen IMS-Identität zugeordnet sind, wird zwischen HSS und S-CSCF eine Bestätigungsnachricht in Form eines Tokens ausgetauscht. Der Token wird hierbei durch einen Zufallsgenerator erzeugt und ist ein 128 Bit langer Zufallswert. Allerdings sind für den token auch andere Werte denkbar, die Zufallseigenschaften besitzen.

Bis zu diesem Schritt entspricht das soeben beschriebene Verfahren dem bereits im Dokument [7] beschriebenen Verfahren. Im Unterschied zu dem Verfahren in Dokument [7] wird der Token jedoch nicht direkt zur Datensicherung zwischen dem UE und dem IMS-Netz eingesetzt. Vielmehr wird im erfindungsgemäßen Verfahren der Token als gemeinsamer Schlüssel für ein weiteres Sicherheitsprotokoll verwendet, das zwischen dem Endgerät UE und dem IMS-Netz eingesetzt wird. In der hier beschriebenen Ausführungsform wird dabei das Sicherheitsprotokoll HTTP-Digest verwendet. Um den Token hierfür einzusetzen, wird dieser zunächst über das GPRS-Netz und die GPRS-Luftschnittstelle an das Benutzerendgerät UE übermittelt. Die GPRS-Luftschnittstelle verwendet eine verschlüsselte Übertragung, so dass man davon ausgehen kann, dass eine sichere Übermittlung des Tokens an das Endgerät UE stattfindet. Innerhalb des IMS-/GPRS-Netzes, d.h. vom S-CSCF bis zu dem Punkt, an dem im GPRS-Netz die Verschlüsselung der Luftschnittstelle einsetzt, wird zunächst von einer Übertragung in einer gesicherten Netzinfrastruktur ausgegangen. Diese Sicherheit kann z.B. durch bekannte Schutzmechanismen wie Firewalls erreicht werden. Kann man nicht von einer ausreichenden Sicherheit innerhalb dieser Infrastruktur ausgehen, so können zusätzliche Sicherungsprotokolle wie IPsec verwendet werden (siehe Dokument [8]).

Nunmehr kennen sowohl das IMS-Netz als auch das Endgerät UE den Token und besitzen somit ein gemeinsames Geheimnis. Dieser Token kann folglich als Schlüssel für HTTP-Digest eingesetzt werden, wobei hierzu die 32-Character-Hex-Codierung in Textdarstellung für den Token verwendet wird. Durch das erfindungsgemäße Verfahren kann somit HTTP-Digest als Sicherheitsprotokoll eingesetzt werden, ohne dass durch aufwändige Mechanismen zuvor ein gemeinsames Geheimnis sowohl für das IMS-Netz als auch für das Endgerät UE bereitgestellt wird. Es wird sich vielmehr die Tatsache zunutze gemacht, dass im erfindungsgemäßen Verfahren, basierend auf der bereits existierenden GPRS-Schlüsselinfrastruktur, im Vorfeld ein Token erzeugt wird, der für HTTP-Digest als gemeinsames Geheimnis genutzt werden kann.

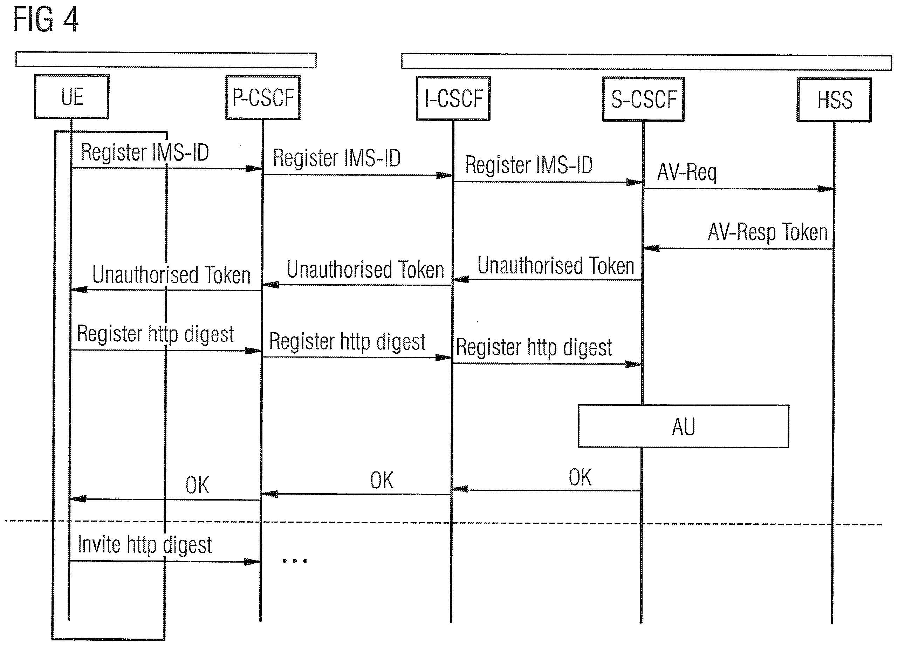

In Figur 4 ist der Nachrichtenfluss gezeigt, mit dem sich ein in dem GPRS-Netz der Figur 3 registrierter Benutzer am IMS-Netz registriert. Zunächst wird vom Benutzerendgerät UE eine Register-Nachricht über den P-CSCF und den I-CSCF an den S-CSCF des GPRS-Netzes gesendet. Die Register-Nachricht beinhaltet die IMS-Identität IMS-ID des Benutzers und einen HTTP-Digest Authorization-Header mit dem Parameter auth-param = "IMS_GPRS_Key_Distr", durch den dem Netz angezeigt wird, dass das erfindungsgemäße verfahren zur Sicherung des Datenverkehrs verwendet werden soll. Dies kann jedoch auch auf andere Weise erreicht werden, zum Beispiel durch feste Konfiguration der Netze oder durch andere Header bzw. Parameter in der Register-Nachricht.

Anschließend wird die Authentizität der Nachricht im S-CSCF überprüft. Dies geschieht - wie zuvor erläutert - durch Vergleichen der im P-CSCF ermittelten IP-Adresse mit der im HSS ermittelten IP-Adresse sowie der entsprechenden IMS-Identitäten. Bei übereinstimmender IMS-Identität wird ein sogenannter AV-Request an den HSS des IMS-Netzes gesendet. Schließlich wird ein AV-Response an den S-CSCF zurückgesendet. Diese Antwort-Nachricht beinhaltet einen Token. Dieser Token wird entsprechend dem Dokument [7] in einer unauthorized Nachricht an den Benutzer gesendet.

Im linken Bereich der Figur 4 ist durch einen grauen Bereich die Luftschnittstelle zwischen dem Endgerät UE und dem -CSCF-Server des GPRS-Netzes angedeutet. Die Datenübertragung über die Luftschnittstelle ist mit bekannten Mechanismen verschlüsselt. Folglich ist die Übertragung des Tokens an das Endgerät UE über die GPRS-Luftschnittstelle geschützt. Im hier beschriebenen Ausführungsbeispiel wird der Token in einem HTTP-Digest-Header übertragen. Alternativ kann der Token auch in einem anderen Header oder Parameter übertragen werden, der unabhängig von dem HTTP-Digest-Header ist. Insbesondere kann der Token auch in einer separaten Nachricht übertragen werden.

Anschließend wird vom Benutzerendgerät UE über die Server P-CSCF und I-CSCF wiederum eine Register-Nachricht an den Rechner S-CSCF gesendet. Diese Register-Nachricht ist mit dem Sicherheitsprotokoll HTTP-Digest gesichert, wobei als gemeinsames Geheimnis zwischen dem Endgerät UE und dem Server S-CSCF der zuvor übertragene Token verwendet wird. Dies ist möglich, da der Token durch die Übertragung der vorangegangenen Register-Nachricht sowohl im Gerät UE als auch im S-CSCF bekannt ist. Schließlich erfolgt die Authentifizierung des Endgeräts UE im IMS-Netz, was in Figur 4 mit AU bezeichnet ist. Danach wird vom S-CSCF an das Gerät UE eine Bestätigung OK zurückgesandt. Im Anschluss kann der eigentliche Datenaustausch zwischen UE und IMS-Netz beginnen, wobei dieser Datenaustausch über HTTP-Digest gesichert ist. In Figur 4 ist beispielhaft eine Invite-Nachricht dargestellt, die im weiteren Datenaustausch gesendet wird.

In der hier beschriebenen Ausführungsform wird HTTP-Digest als Sicherheitsmechanismus für die IMS-Signalisierung verwendet. Statt HTTP-Digest könnten jedoch auch andere Sicherheitsmechanismen für die IMS-Signalisierung eingesetzt werden, sofern diese Sicherheitsmechanismen dynamische Schlüssel bzw. Passwörter verwenden. Ein weiteres Beispiel eines solchen Sicherheitsmechanismus ist der Mechanismus CMS (CMS = Cryptographic Message Syntax).

Das erfindungsgemäße Verfahren kann insbesondere auch zur Sicherung von HTTP-basierter Kommunikation zu Applikationsservern verwendet werden. Es wird davon ausgegangen, dass der Benutzer aktuell an einem IMS-Netz angemeldet ist oder zumindest angemeldet war und über einen gültigen Token verfügt, der vom IMS-Netz akzeptiert wurde. Wenn nun ein Benutzer über das Endgerät UE mit einem HTTP-basierten Applikationsserver, der mit dem IMS-Netz verbunden ist, kommuniziert, kann HTTP-Digest zur Sicherung der HTTP-Nachrichten eingesetzt werden, wobei als Passwort für HTTP-Digest der Token verwendet wird. Damit der HTTP-Server in der Lage ist, die durch HTTP-Digest geschützte Nachricht zu prüfen, benötigt er ebenfalls diesen Token. Dieser wird dazu entweder vom S-CSCF oder vom HSS des IMS-Netzes an den Applikationsserver gesendet. Entsprechende Schnittstellen hierfür sind bekannt. Somit kann sowohl für die SIP-Signalisierung als auch für die HTTP-Signalisierung für Antworten aus dem IMS-Netz bzw. von einem HTTP-Applikationsserver eine Sicherung über HTTP-Digest durchgeführt werden.

Zusätzlich ist es möglich, für HTTP-Digest die Client- und Server-Rollen zu tauschen. Üblicherweise werden die Nachrichten geschützt, die von dem Benutzerendgerät UE als Client gesendet werden. Für die Antworten des Netzes, das als Server agiert, werden die Nachrichten nur optional geschützt. Bei der Signalisierung mittels SIP kommt es jedoch vor, dass das Endgerät UE die Serverrolle und das Netz die Clientrolle übernimmt. In diesem Fall kann HTTP-Digest entsprechend in umgekehrter Richtung eingesetzt werden, so dass beispielsweise das Endgerät UE eine unauthorized Nachricht an den S-CSCF im IMS-Netz sendet.

### Literaturverzeichnis:

[1] 3GPP SA3 (Security) (2002-09): "Access security for IP-based services (Release 5)", Technical specification 33.203 v5.3.0
[2] Siemens Paper on the IMS 2.0 early-start solution: "early-start-ims-paper-final.zip"
[3] http://www.3gpp.org/ftp/tsg_sa/WG3_Security/ TSGS3_30_Povoa/Docs/ZIP/S3-030551.zip
[4] Ericsson, Motorola, Siemens, Nokia: "Push-To-Talk over Cellular (PoC); Signaling Flows; PoC Release 1.0", V 1.1.3, 8/2003.
[5] Ericsson, Motorola, Siemens, Nokia: "Push-To-Talk over Cellular (PoC); List management and do-not-disturb; PoC Release 1.0", V 1.1.3, 8/2003.
[6] Ericsson, Motorola, Siemens, Nokia: "Push-To-Talk over Cellular (PoC); Architecture; PoC Release 1.0", V 1.1.0, 8/2003.
[7] Siemens Presentation at Eurescom 2003: earlyims-slides-final-2003-09-17 (petri).ppt
[8] 3GPP SA3 (Security) (2002-09): "Network domain security; IP network layer security (Release 5)", Technical specification 33.210 v5.3.0

## Patentansprüche

1. Verfahren zur Benutzerauthentifizierung und Sicherung des Datenverkehrs zwischen einem Mobilfunknetz (3) und einem IMS-Netz (4):
- bei dem sich ein mobiler Teilnehmer (UE) im Mobilfunknetz (3) authentifiziert;
- bei dem sich der mobile Teilnehmer (UE) im IMS-Netz (4) authentifiziert;
- **dadurch gekennzeichnet, dass**:
überprüft wird, ob die Identität des im IMS-Netz (4) authentifizierten mobilen Teilnehmers (UE) mit der Identität des im Mobilfunknetz (3) authentifizierten Teilnehmers (UE) übereinstimmt; und
im Falle übereinstimmender Identitäten : eine Bestätigungsnachricht von dem IMS-Netz (4) an den mobilen Teilnehmer (UE) gesendet wird und
- ein Datenaustausch zwischen dem mobilen Teilnehmer (UE) und dem IMS-Netz (4) über ein durch einen gemeinsamen Schlüssel geschütztes Sicherheitsprotokoll erfolgt, wobei der Schlüssel für das Sicherheitsprotokoll aus der Bestätigungsnachricht abgeleitet wird.

2. Verfahren nach Anspruch 1, bei dem der Schlüssel die Bestätigungsnachricht ist.

3. Verfahren nach Anspruch 1 oder 2, bei dem der Schüssel ein gemeinsames Geheimnis zwischen dem IMS-Netz (4) und dem mobilen Teilnehmer (UE) ist.

4. Verfahren nach Anspruch 1 oder 2, bei dem der Schlüssel ein von dem mobilen Teilnehmer (UE) eingebbares Passwort ist.

5. Verfahren nach einem der vorhergehenden Ansprüche, bei dem die Bestätigungsnachricht ein Zufallswert ist.

6. Verfahren nach einem der vorhergehenden Ansprüche, bei dem sich der mobile Teilnehmer (UE) im IMS-Netz (4) über das SIP-Protokoll (SIP = Session Initiation Protocol) und/oder HTTP-Protokoll authentifiziert.

7. Verfahren nach einem der vorhergehenden Ansprüche, bei dem das Sicherheitsprotokoll HTTP-Digest ist.

8. Datennetz, umfassend ein Mobilfunknetz und ein IMS-Netz, wobei das Datennetz derart ausgestaltet ist, dass der Datenverkehr zwischen einem mobilen Teilnehmer des Mobilfunknetzes (3) und dem IMS-Netz (4) gemäß einem Verfahren nach einem der vorhergehenden Ansprüche gesichert ist.

9. Datennetz nach Anspruch 8, bei dem das Mobilfunknetz (3) ein GPRS- und/oder UMTS-Netz ist.

## Claims

1. Method for user authentication and securing of the data traffic between a mobile radio network (3) and an IMS network (4) :
- in which a mobile subscriber (UE) authenticates itself in the mobile radio network (3);
- in which the mobile subscriber (UE) authenticates itself in the IMS network (4);
- **characterized in that**:
a check is performed to determine whether the identity of the mobile subscriber (UE) authenticated in the IMS network (4) is concordant with the identity of the subscriber (UE) authenticated in the mobile radio network (3);
and
in the event of concordant identities:
a confirmation message is sent from the IMS network (4) to the mobile subscriber (UE) and
- a data interchange is effected between the mobile subscriber (UE) and the IMS network (4) using a security protocol protected by a shared key, the key for the security protocol being derived from the confirmation message.

2. Method according to Claim 1, in which the key is the confirmation message.

3. Method according to Claim 1 or 2, in which the key is a shared secret between the IMS network (4) and the mobile subscriber (UE).

4. Method according to Claim 1 or 2, in which the key is a password enterable by the mobile subscriber (UE).

5. Method according to one of the preceding claims, in which the confirmation message is a random value.

6. Method according to one of the preceding claims, in which the mobile subscriber (UE) authenticates itself in the IMS network (4) using the SIP protocol (SIP = Session Initiation Protocol) and/or HTTP protocol.

7. Method according to one of the preceding claims, in which the security protocol is HTTP digest.

8. Data network, comprising a mobile radio network and an IMS network, wherein the data network is designed such that the data traffic between a mobile subscriber of the mobile radio network (3) and the IMS network (4) is protected based on the method according to one of the preceding claims.

9. Data network according to Claim 8, in which the mobile radio network (3) is a GPRS and/or UMTS network.

## Revendications

1. Procédé d'authentification d'utilisateur et sécurisation du trafic de données entre un réseau de téléphonie mobile (3) et un réseau IMS (4):
- dans lequel un abonné mobile (UE) s'authentifie dans le réseau de téléphonie mobile (3);
- dans lequel l'abonné mobile (UE) s'authentifie dans le réseau IMS (4);
**caractérisé en ce que**
il est vérifié si l'identité de l'abonné mobile (UE) authentifié dans le réseau IMS (4) concorde avec l'identité de l'abonné (UE) authentifié dans le réseau de téléphonie mobile (3);
et
en cas d'identités concordantes
il est envoyé un message de confirmation du réseau IMS (4) à l'abonné mobile (UE) et
- un échange de données entre l'abonné mobile (UE) et le réseau IMS (4) s'effectue par un protocole de sécurité protégé par une clé commune, la clé pour le protocole de sécurité étant dérivée du message de confirmation.

2. Procédé selon la revendication 1, dans lequel la clé est le message de confirmation.

3. Procédé selon la revendication 1 ou 2, dans lequel la clé est un secret commun entre le réseau IMS (4) et l'abonné mobile (UE).

4. Procédé selon la revendication 1 ou 2, dans lequel la clé est un mot de passe que peut donner l'abonné mobile (UE).

5. Procédé selon l'une des revendications précédentes, dans lequel le message de confirmation est une valeur aléatoire.

6. Procédé selon l'une des revendications précédentes, dans lequel l'abonné mobile (UE) dans le réseau IMS (4) s'authentifie par le protocole SIP (*SIP* = *Session Initiation Protocol*) et/ou le protocole HTTP.

7. Procédé selon l'une des revendications précédentes, dans lequel le protocole de sécurité est un condensé HTTP.

8. Réseau de données, comprenant un réseau de téléphonie mobile et un réseau IMS, le réseau de données étant configuré de sorte que le trafic de données entre un abonné mobile du réseau de téléphonie mobile (3) et le réseau IMS (4) est sécurisé par un procédé selon l'une des revendications précédentes.

9. Réseau de données selon la revendication 8, dans lequel le réseau de téléphonie mobile (3) est un réseau GPRS et/ou UMTS.
